# EUROPÄISCHE PATENTSCHRIFT

(11) **EP 1 180 635 B1**
(45) Veröffentlichungstag und Bekanntmachung des Hinweises auf die Patenterteilung: **15.06.2005**
(21) Anmeldenummer: 01118551.9
(22) Anmeldetag: 01.08.2001
(51) Int. Cl.: F16L 59/14

(54) **Dämmaterial für Rohrleitungen**
Damping material for pipes
Materiau isolant pour tuyaux

(30) Priorität: 17.08.2000 DE 10040346
(43) Veröffentlichungstag der Anmeldung: 20.02.2002
(73) Patentinhaber: E. Missel GmbH & Co., D-70374 Stuttgart (DE)
(72) Erfinder:
(74) Vertreter: Manitz, Finsterwald & Partner Gbr

(56) Entgegenhaltungen:
- FR-A- 1 291 023
- US-A- 2 532 587
- US-A- 3 206 867
- US-A- 3 640 787

## Beschreibung

Die Erfindung betrifft ein Dämmaterial für Rohrleitungen, insbesondere für auf Rohbetondecken zu verlegende Rohrleitungen.

Aus der DE 34 10 838 A1 ist ein Dämmaterial für Rohrleitungen bekannt, das im Querschnitt im wesentlichen rechteckig ist und bei dem die unterhalb des Rohres gelegene Dämmstoffschicht dicker ausgebildet ist als in dem seitlichen und oberen Bereich. Auf diese Weise kann unter Gewährleistung der geforderten Dämmwirkung eine deutliche Verringerung der Bauhöhe der gedämmten Rohrleitung erzielt werden.

Dämmaterialien, die nach diesem prinzipiellen, von der Anmelderin als Kompaktdämmhülse bezeichneten Konstruktionsprinzip aufgebaut sind, haben sich in der Praxis bewährt.

Aufgabe der vorliegenden Erfindung ist es, eine weitere Verbesserung derartiger Dämmaterialien zu erreichen, so daß die Qualität der Dämmaterialien erhöht und zu einer Beeinträchtigung der Dämmwirkung führende Beschädigungen, wie sie insbesondere im rauhen Baustellenbetrieb auftreten können, ausgeschlossen werden.

Gelöst wird diese Aufgabe nach der Erfindung im wesentlichen durch eine das jeweilige Rohr mit Spiel umschließende Innenhülle mit zumindest einem integrierten Festigkeitsträger in Form einer flexiblen, im wesentlichen nicht dehnbaren Fadenstruktur, eine bezüglich der Innenhülle beabstandete, flexible Außenhülle aus wasserundurchlässigem Verbundmaterial mit wenigstens einer zumindest rißbegrenzenden Verstärkungslage, sowie eine bezogen auf die Rohraufnahme in Radialrichtung unterschiedliche Dicke aufweisende, die Außenkontur des Dämmaterials zumindest im wesentlichen bestimmende, ein- oder mehrlagige Dämmstoffschicht, die zwischen der Innenhülle und der Außenhülle angeordnet und mit beiden Hüllen verbunden ist.

Durch die Verwendung von jeweils durch Festigkeitsträger verstärkten Außen- und Innenhüllen und deren Zusammenwirken über das zwischen diesen beiden Hüllen angeordnete Dämmstoffmaterial wird eine äußerst stabile Gesamtanordnung erhalten, die auch bei unsachgemäßer Behandlung weder von außen her noch bei der Rohreinführung von innen her so beschädigt werden kann, daß die Dämmeigenschaften in unzulässiger Weise beeinträchtigt werden.

Insbesondere die mit einem integrierten Festigkeitsträger ausgestattete Innenhülle, die rohrseitig vorzugsweise eine aus einer Folienschicht bestehende Gleitschicht aufweist, trägt dazu bei, daß die Handhabung des Dämmaterials, insbesondere das Aufziehen des Dämmaterials auf Rohrabschnitte erleichtert und ohne die Gefahr einer Beschädigung des Dämmaterials durchgeführt werden kann. Dies spielt insbesondere dann in der Praxis eine wesentliche Rolle, wenn das Dämmaterial über gekrümmte Bereiche eines Rohres gezogen bzw. geschoben werden muß, da in diesen Fällen gerade bei Rohren mit scharfkantigen Stirnflächen die Gefahr einer Dämmaterialbeschädigung groß ist.

Die Gitter-, Netz- oder Gewebeverstärkung kann für die Innenhülle und die Außenhülle unterschiedlich gestaltet sein, so daß auch den unterschiedlichen Anforderungen Rechnung getragen wird.

Nach einer bevorzugten Ausgestaltung der Erfindung besitzt das Dämmaterial eine im wesentlichen rechteckige Außenkontur, wobei die Höhe durch die erforderliche Stärke der bodenseitig gelegenen Dämmstoffschicht und das auf dieser Dämmstoffschicht gelagerte Rohr bestimmt ist, während die Breite im wesentlichen durch den Rohrdurchmesser vorgegeben ist. In diesem Falle ist der Abstand zwischen Innenhülle und Außenhülle in Höhe der Rohrmitte minimiert, und bevorzugt liegt zwischen beiden Hüllen ein Direktkontakt vor. Diese Ausgestaltung ist dann von besonderem Vorteil, wenn mehrere Rohre unmittelbar nebeneinander liegend montiert werden müssen, da dann wiederum unter Gewährleistung der Anforderungen hinsichtlich der Wärmedämmung die maximal mögliche Anzahl von Rohren auf dem geringstmöglichen Raum innerhalb des Estrichs untergebracht werden kann.

Weitere vorteilhafte Ausgestaltungen der Erfindung sind in den Unteransprüchen angegeben. Ein Ausführungsbeispiel der Erfindung wird anhand der Zeichnung erläutert.

Die einzige Figur der Zeichnung zeigt in schematischer Weise eine Querschnittsdarstellung eines erfindungsgemäßen Dämmaterials für eine Rohrleitung.

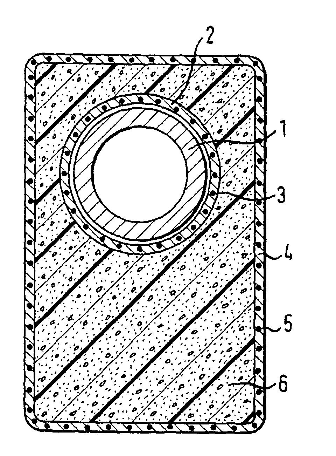

Das Dämmaterial nach Figur 1 dient zur Aufnahme einer insbesondere Warmwasser führenden Rohrleitung 1, welche mit Spiel im Dämmaterial aufgenommen ist.

Das Dämmaterial besteht aus einer das jeweilige Rohr 1 mit vorgebbarem Spiel umschließenden Innenhülle 2, einer diese Innenhülle 2 umschließenden Außenhülle 4 und einem Dämmstoff 6, der zwischen Innenhülle 2 und Außenhülle 4 angeordnet ist und aus einem flexiblen Schaumstoff besteht.

Die Außenkontur der Dämmung ist im wesentlichen rechteckig, wobei die minimale Breite des Dämmaterials im wesentlichen durch den Rohrdurchmesser vorgegeben wird, während die Höhe bestimmt ist durch die Summe aus Rohrdurchmesser und die Höhe der unterhalb des Rohrs gelegenen Dämmstoffschicht, wobei diese Höhe wiederum durch die jeweiligen Dämmanforderungen vorgegeben wird.

Wesentlich ist im Rahmen der Erfindung, daß sowohl die Innenhülle 2 als auch die Außenhülle 4 jeweils einen integrierten Festigkeitsträger in Form einer flexiblen, im wesentlichen nicht dehnbaren Fadenstruktur aufweisen. Diese Verstärkungsstrukturen können gitter- oder netzförmig gestaltet sein oder aus einer Gewebeverstärkung bestehen. Hinsichtlich der Außenhülle wird auf diese Weise sichergestellt, daß auch im rauhen Baustellenbetrieb keine störenden Beschädigungen des Dämmaterials auftreten können, da diese Verstärkungen zumindest rißbegrenzend wirken, während die integrierten Festigkeitsträger 3 der Innenhülle 2 sicherstellen, daß das Dämmaterial auch von innen her bei eventuell unsachgemäßer Handhabung während des Aufziehens auf das jeweilige Rohr nicht durchstoßen werden kann, und zwar auch dann nicht, wenn das Dämmaterial über gekrümmte Rohre gezogen werden muß. Außerdem trägt diese spezielle Ausgestaltung der Innenhülle dazu bei, daß der Vorgang des Aufziehens des Dämmaterials auf das jeweilige Rohr erleichtert wird, wozu insbesondere auch eine Gleitschicht in Form einer Folienschicht beitragen kann, welche rohrseitig an der Innenhülle 2 vorgesehen ist.

Insbesondere wenn das Dämmaterial als Formteil für nachträgliche Dämmungen, insbesondere für T-Stücke, enge Krümmer und/oder Kreuzungen usw. ausgebildet ist, wird eine dem Rohrverlauf folgende, durchgehende Schlitzung des Dämmaterials vorgesehen, wobei dem Verlauf des jeweiligen Schlitzes eine Schnellverschlußanordnung, insbesondere in Form eines Klettverschlusses, zugeordnet ist. Auch in diesem Falle wirkt sich das Zusammenspiel zwischen Außenhülle 4 und Innenhülle 2 vorteilhaft aus, da durch diese mit dem jeweiligen Dämmstoff 6 fest verbundenen Hüllen die Formstabilität gefördert wird und Beschädigungsgefahren ausgeschaltet werden.

## Patentansprüche

1. Dämmaterial für Rohrleitungen, insbesondere für auf Rohbetondekken zu verlegende Rohrleitungen, mit
einer das jeweilige Rohr (1) mit Spiel teilweise oder vollständig umschließenden Innenhülle (2) mit zumindest einem integrierten Festigkeitsträger (3) in Form einer flexiblen, reißfesten und wenig dehnbaren Faden- oder Netzstruktur,
einer bezüglich der Innenhülle (2) beabstandeten, flexiblen Außenhülle (4) aus wasserundurchlässigem Verbundmaterial mit wenigstens einer zumindest rißbegrenzenden Verstärkungslage (5),
sowie einer bezogen auf die Rohraufnahme in Radialrichtung unterschiedliche Dicke aufweisenden, die Außenkontur des Dämmaterials zumindest im wesentlichen bestimmenden, ein- oder mehrlagigen Dämmstoffschicht (6), die zwischen der Innenhülle (2) und der Außenhülle (4) angeordnet und mit beiden Hüllen (2, 4) verbunden ist.

2. Dämmaterial nach Anspruch 1,
**dadurch gekennzeichnet,**
**daß** die im wesentlichen wenig dehnbare Faden- oder Netzstruktur (3) der Innenhülle (2) aus einer Gitter-, Netz- oder Gewebeverstärkung besteht.

3. Dämmaterial nach Anspruch 1 oder 2,
**dadurch gekennzeichnet,**
**daß** die Innenhülle (2) und die Außenhülle (4) mit gleichartigen oder identischen Verstärkungslagen versehen sind.

4. Dämmaterial nach einem der vorhergehenden Ansprüche,
**dadurch gekennzeichnet,**
**daß** die Dämmstoffschicht (6) aus einer flexiblen, insbesondere geschlossenzelligen Schaumstoffschicht besteht.

5. Dämmaterial nach einem der vorhergehenden Ansprüche,
**dadurch gekennzeichnet,**
**daß** die Innenhülle (2) rohrseitig eine Gleitschicht, insbesondere in Form einer Folienschicht aufweist.

6. Dämmaterial nach einem der vorhergehenden Ansprüche,
**dadurch gekennzeichnet,**
**daß** der Festigkeitsträger (3) in die Folienschicht integriert ist.

7. Dämmaterial nach einem der vorhergehenden Ansprüche,
**dadurch gekennzeichnet,**
**daß** durch die Dämmstoffschicht (6) eine im wesentlichen rechteckige Außenkontur vorgegeben ist, wobei der Abstand zwischen Innenhülle (2) und Außenhülle (4) in Höhe der Rohrmitte minimiert ist und bevorzugt ein Direktkontakt zwischen beiden Hüllen vorliegt.

8. Dämmaterial nach einem der vorhergehenden Ansprüche,
**gekennzeichnet durch**
eine dem Rohrverlauf folgende, durchgehende Längsschlitzung, wobei der jeweilige Längsschlitz über einen Schnellverschluß, insbesondere Klettverschluß, schließbar ist.

9. Dämmaterial nach Anspruch 8,
**dadurch gekennzeichnet,**
**daß** die Längsschlitzung im Bereich der geringsten radialen Dicke der Dämmstoffschicht (6) vorgesehen ist.

10. Dämmaterial nach oder mehreren der vorhergehenden Ansprüche,
**gekennzeichnet durch**
eine Ausbildung als Formteil für nachträgliche Rohrdämmung, insbesondere für T-Stücke, enge Krümmer und/oder Kreuzungen.

## Claims

1. Insulating material for piping, in particular for piping to be laid on rough cast concrete floors, comprising
an inner sleeve surrounding the respective pipe (1) partly or completely with clearance and having at least one integrated strength carrier (39) in the form of a flexible, tear-resistant thread structure or net structure of low extensibility;
a flexible outer sleeve (4) spaced apart with respect to the inner sleeve (2) and made of water-impermeable composite material having at least one at least tear-limiting reinforcement layer (5);
and a single-ply or multi-ply insulating material layer (6) which has a varying thickness in the radial direction with respect to the pipe mount, which at least substantially determines the outer contour of the insulation material, and is arranged between the inner sleeve (2) and the outer sleeve (4) and is connected to both sleeves (2, 4).

2. Insulating material in accordance with claim 1, **characterised in that** the thread structure or net structure (3) of the inner sleeve (2) of substantially low extensibility consists of a grid reinforcement, a net reinforcement or a fabric reinforcement.

3. Insulating material in accordance with claim 1 or claim 2, **characterised in that** the inner sleeve (2) and the outer sleeve (4) are provided with similar or identical reinforcement layers.

4. Insulating material in accordance with any one of the preceding claims, **characterised in that** the insulating material layer (6) consists of a flexible foam layer, in particular of a closed-cell foam layer.

5. Insulating material in accordance with any one of the preceding claims, **characterised in that** the inner sleeve (2) has an anti-friction layer, in particular in the form of a foil layer, on the pipe side.

6. Insulating material in accordance with any one of the preceding claims, **characterised in that** the strength carrier (3) is integrated into the foil layer.

7. Insulating material in accordance with any one of the preceding claims, **characterised in that** a substantially rectangular outer contour is pre-determined by the insulating layer (6), with the spacing between the inner sleeve (2) and the outer sleeve (4) being minimised at the level of the tube centre and a direct contact preferably being present between the two sleeves.

8. Insulating material in accordance with any one of the preceding claims, **characterised by** a continuous longitudinal slit following the course of the pipe, with the respective longitudinal slit being closable using a quick closure, in particular a hook and loop or adhesive closure.

9. Insulating material in accordance with claim 8, **characterised in that** the longitudinal slit is provided in the region of the lowest radial thickness of the insulating material layer (6).

10. Insulating material in accordance with one or more of the preceding claims, **characterised by** a design as a shaped part for subsequent pipe insulation, in particular for T-pieces, tight bends and/or junctions.

## Revendications

1. Matériau isolant pour tuyauteries, en particulier pour tuyauteries à poser sur des planchers bruts en béton, comportant
une enveloppe intérieure (2) entourant partiellement ou entièrement le tuyau (1) respectif avec jeu avec au moins un porteur de solidité (3) intégré sous forme d'une structure en fils ou d'une structure réticulaire flexible, résistant à la déchirure et peu extensible,
une enveloppe extérieure flexible espacée par rapport à l'enveloppe intérieure (2), constituée par un matériau composite imperméable à l'eau avec au moins une couche de renforcement (5) limitant au moins les déchirures,
ainsi qu'une couche de matériau isolant (6) monocouche ou multicouche présentant une épaisseur différente par rapport au logement de tuyau en direction radiale, déterminant au moins sensiblement le contour extérieur du matériau isolant, laquelle est agencée entre l'enveloppe intérieure (2) et l'enveloppe extérieure (4) et est reliée aux deux enveloppes (2, 4).

2. Matériau isolant selon la revendication 1, **caractérisé en ce que** la structure en fils ou la structure réticulaire (3) sensiblement peu extensible de l'enveloppe intérieure (2) est constituée par un renforcement en forme de grille, de treillis ou de tissu.

3. Matériau isolant selon l'une ou l'autre des revendications 1 et 2, **caractérisé en ce que** l'enveloppe intérieure (2) et l'enveloppe extérieure (4) sont pourvues de couches de renforcement similaires ou identiques.

4. Matériau isolant selon l'une des revendications précédentes, **caractérisé en ce que** la couche de matériau isolant (6) est constituée par une couche de mousse flexible, en particulier à cellules fermées.

5. Matériau isolant selon l'une des revendications précédentes, **caractérisé en ce que** côté tuyau, l'enveloppe intérieure (2) présente une couche glissante, en particulier sous forme d'une couche de feuille.

6. Matériau isolant selon l'une des revendications précédentes, **caractérisé en ce que** le porteur de solidité (3) est intégré à la couche de feuille.

7. Matériau isolant selon l'une des revendications précédentes, **caractérisé en ce que** par la couche de matériau isolant (6) est prédéterminé un contour extérieur sensiblement rectangulaire, la distance entre l'enveloppe intérieure (2) et l'enveloppe extérieure (4) étant minimisée à la hauteur du milieu du tuyau, et **en ce qu'**il existe de préférence un contact direct entre les deux enveloppes.

8. Matériau isolant selon l'une des revendications précédentes, **caractérisé par** un système de fentes longitudinales continu suivant le tracé du tuyau, la fente longitudinale respective pouvant être fermée par une fermeture rapide, en particulier par fermeture adhésive.

9. Matériau isolant selon la revendication 8, **caractérisé en ce que** le système de fentes longitudinales est prévu dans la région de l'épaisseur radiale la plus faible de la couche de matériau isolant (6).

10. Matériau isolant selon plusieurs des revendications précédentes, **caractérisé par** une réalisation en tant que pièce moulée pour une isolation de tuyau a posteriori, en particulier pour des pièces en T, des coudes étroits et/ou des croisements.
